# EUROPEAN PATENT APPLICATION

(11) **EP 4 763 900 A1**
(43) Date of publication of application: **24.06.2026**
(21) Application number: 24221784.2
(22) Date of filing: 19.12.2024
(51) Int. Cl.: C08K 3/04, B01D 71/54, B32B 27/40, C09D 175/04

(54) **CONDUCTIVE FLAME RETARDANT AND BREATHABLE MEMBRANE**

(71) Applicant: UC Bacon Company Limited, Taoyuan City 330022 (TW)
(72) Inventor: Wu, Ting Yu, 32054 Taoyuan City (TW); Li, Shan, 23741 New Taipei City (TW)
(74) Representative: Cabinet Chaillot

(57) **Abstract**

A conductive flame retardant and breathable membrane, which adds an multi-layered graphene with a solid weight ratio of 30-70wt% and a polyrotaxane with a solid weight content of 15wt% relative to the conductive flame retardant and breathable membrane to a polyurethane resin, the polyrotaxane contains compounds of linear polymers and cyclic molecules, the cyclic molecules of polyrotaxane are also modified by surface modification with a halogen-free flame-retardant polymer material, in addition to the moisture permeability and waterproofness of polyurethane resin, the multi-layered graphene also increase the conductivity, and the dispersibility of multi-layered graphene is improved by adding polyrotaxane and the flexibility of polyurethane resin is improved, and use the polyrotaxane modification to improve the flame retardancy of polyurethane resin.

## Description

### BACKGROUND OF THE INVENTION

### 1. Field of the Invention:

A conductive flame retardant and breathable membrane, especially to one that adding polyrotaxane to improve the flexibility of polyurethane resin, and use the polyrotaxane modification to improve the flame retardancy of polyurethane resin, and simultaneously increase the amount of graphene added.

### 2. Description of the Related Art:

There are many hydrogen bonds in the molecular composition of polyurethane, which results in large intermolecular forces, strong adhesion, and stable chemical properties, thus, it is easy to form a membrane with waterproof and moisture-permeable properties, so it is widely used in fabric lamination; Fabrics laminated with membrane with waterproof and moisture-permeable properties are basic standard of outdoor mountaineering jackets, snow jackets and other related products currently on the market. Most waterproof and breathable membrane laminated fabrics emphasize their high moisture permeability and high waterproofness. It protects the wearer from getting wet during heavy rainfall during outdoor sports. The high moisture permeability of the membrane can also help the moisture on the surface of the body to be smoothly discharged to avoid the stuffy feeling of wearing it.

Work overalls in some special working environments, such as fire fighter's protective clothing, clean room work overalls, medical work overalls or military/police suits, are used in the environment to avoid dangerous to the wearer due to static electricity accumulation or electromagnetic signal reflection. In addition to the above-mentioned moisture permeability and waterproofness, the membrane materials used usually also meet the requirement of high conductivity on the premise of being flame retardant.

The present invention includes a high-concentration graphene dispersion slurry with excellent fluidity by combining high crystallinity multi-layered graphene and modified polyrotaxane with a special chemical structure, and combines with a highly moisture-permeable polyurethane resin to prepare a graphene moisture-permeable membrane, using modified polyrotaxane polymers to improve the flame retardancy and flexibility of moisture-permeable polyurethane, so as to simultaneously achieve high conductivity with high graphene additions to meet the physical property requirements of special work overalls.

### SUMMARY OF THE INVENTION

A primary objective of the present invention is to provide a conductive flame retardant and breathable membrane using modified polyrotaxane polymers to improve the flame retardancy and flexibility of moisture-permeable polyurethane, so as to simultaneously achieve high conductivity with high graphene additions to meet the physical property requirements of special work overalls.

In order to achieve the above objective, the present invention adds a multi-layered graphene with a solid weight ratio of 30~70wt% and a polyrotaxane with a solid weight content of 15wt% relative to the conductive flame retardant and breathable membrane to a polyurethane resin, the polyrotaxane contains compounds of linear polymers and cyclic molecules, the cyclic molecules of polyrotaxane are also modified by surface modification with a halogen-free flame-retardant polymer material, in addition to the moisture permeability and waterproofness of polyurethane resin, the multi-layered graphene also increase the conductivity, and the dispersibility of multi-layered graphene is improved by adding polyrotaxane and the flexibility of polyurethane resin is improved, and use the polyrotaxane modification to improve the flame retardancy of polyurethane resin.

In the context of the present invention, multi-layered graphene is graphene having from 6 to 8 layers.

In a particular embodiment, the solid weight ratio of the multi-layered graphene is 30~70wt%, the solid weight ratio of the polyrotaxane is 15~35wt%, the solid weight ratio of the polyurethane resin is 15~35wt%.

Also, the arrangement of graphene in the polyurethane substrate is improved, which will improve the stacking density of graphene and effectively improve the conductivity of the membrane through the tightly stacked structure.

Also, the formed conductive flame retardant and breathable membrane by one coating has characteristics listed below, the thickness is between 30~50um, the basis weight range is between 35gsm~60gsm, the surface resistance measured according to JIS K-7194 method is at least ≦ 10² Ω/sq, the moisture permeability measured according to JIS L1099B-1 standard is at least 3000g/m²/24h, the water pressure resistance value measured according to JIS L1092B-2009 standard is at least 10000mmH₂O, the flame retardancy can pass the flame retardant test specification of FAR 25.853, under the electromagnetic wave frequency 0.5GHz-12GHz test range, the power loss percentage is at least greater than 30%.

Also, the preferred solid weight ratio of the multi-layered graphene is 50~60wt%, the halogen-free flame-retardant polymer material is low molecular weight polymer materials containing phosphorus chemical groups, and the phosphorus content must exceed 10%, the ratio of starting material of polyrotaxane/halogen-free polymer =1/9. The moisture permeability of the polyurethane resin measured according to JIS L1099 B-1 standard is at least 100000g/m²/24h, the average molecular weight of the polyrotaxane is between 100,000 and 500,000, at least 95% of the multi-layered graphene has a lateral size of 1000~30000nm and thickness of 0.34~7nm, and the oxygen content of multi-layered graphene is at least less than 0.1%, the thickness ratio of multi-layered graphene is between 200 and 400, wherein the preferred condition is the multi-layered graphene has a lateral size of 6000 ~ 8000nm and thickness of 2~3nm.

Also, the polyurethane resin includes at least a reactive functional group, the polyrotaxanes include compounds of the linear polymers and the cyclic molecules; the linear polymers serve as the axis molecules in the compounds and have a molecular weight of more than 10,000 and can be chemically modified by stopper molecule; the cyclic molecules allow the linear chain molecules to pass through, and having at least one reactive functional group capable of producing a crosslinking reaction with the reactive functional groups in the polyurethane resin, wherein the main chain polymer of the linear polymers includes the polymers of polyvinyl alcohol, polyvinylpyrrole, polyethylene glycol, polypropylene glycol, polyvinyl acetal resin, polydimethylsiloxane, polyamine, polyethyleneimine, polyolefin, polyester, polyvinyl chloride, polystyrene, acrylonitrile-styrene or derivatives thereof; the stopper molecule includes a dinitrophenyl group, an adamantyl group or a trityl group; the cyclic molecule includes a calixarene compound, a cryptether compound, a cyclic aromatic compound, a macrocyclic amine compound, a crown ether compound or a cyclodextrin compound.

Also, the linear polymers are the linear polymers based on polyethylene glycol; the cyclic molecules are the cyclodextrin, substituted cyclodextrin, or reactive functional groups are further added into the substitution structure to obtain a substituted cyclodextrin compound. The reactive functional groups added into the cyclic molecules include hydroxy, carboxyl, acrylic, methacrylic, epoxy or vinyl. The reactive functional groups in polyurethane resin include carbonyl groups, amine groups, hydroxyl groups and epoxy groups.

### BRIEF DESCRIPTION OF THE DRAWINGS

FIG. 1 is a schematic diagram illustrating the structure of the present invention.

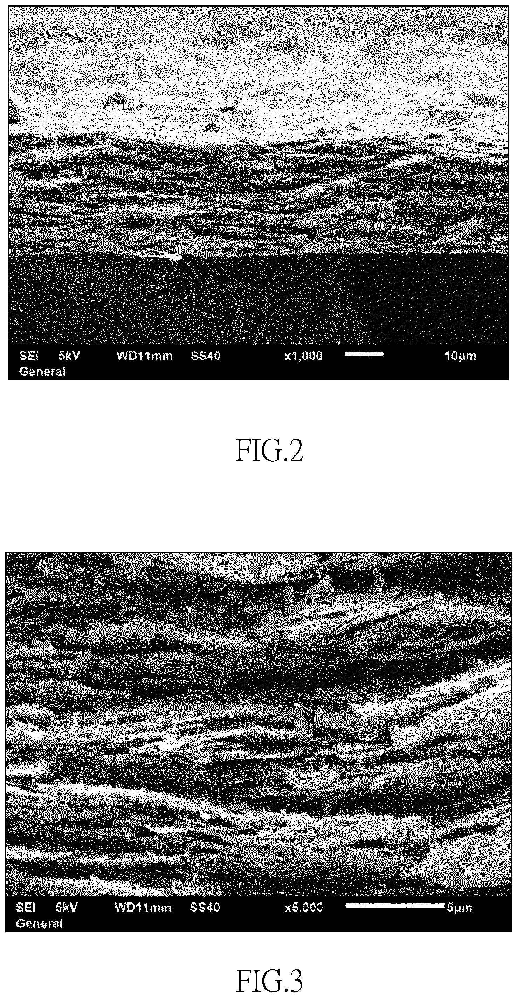

FIG. 2 is a sectional view of the structure of the present invention.
FIG. 3 is a sectional view of the structure of the present invention.

### DETAILED DESCRIPTION OF THE PREFERRED EMBODIMENT

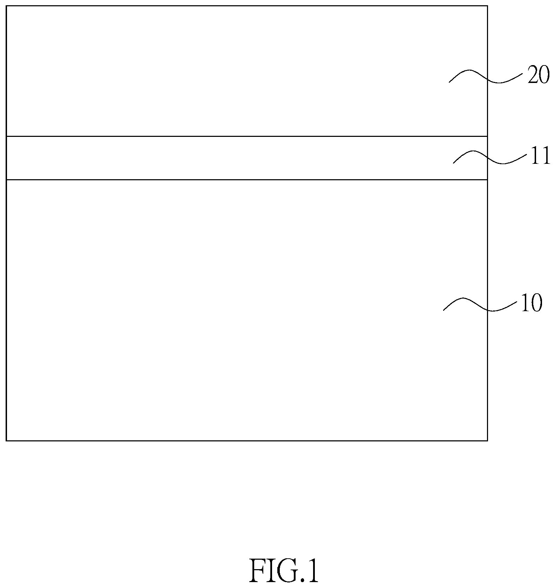

Referring to FIG. 1, the manufacturing steps of the conductive flame retardant and breathable membrane of the present invention is:
a1. Dispersing the slurry of high-concentration multi-layered graphene with a liquid viscosity between 1000 and 3000 cps which includes an active agent, a solvent and an multi-layered graphene with a solid weight ratio of 30~70 wt%, lateral size is 6000~8000nm, the layer numbers of multi-layered graphene here is 6-8 layers, thickness is 2~3nm, and the oxygen content of multi-layered graphene is at least less than 0.1%; The characteristics of the slurry of high-concentration multi-layered graphene include: 1) After a certain storage time, the concentration distribution difference of the stored slurry is less than 20%, 2) After a certain redispersion process, the concentration distribution difference of the slurry is less than 5%; The active agent here is referred to as the dispersion agent and solvent for graphene suspension, in which are disclosure in the prior invention of US20210340382A1 - Graphene dispersion. The dispersion agent here is referred to as Dopamine, Poly Vinyl Pyrrolidone(PVP), Vinyl Pyrrolidone /Vinyl Acetate copolymer(PVP/VA copolymer), Pluronic F-127, etc. The solvent here is referred to as N,N-dimethyl aceramide(DMAc), N, N-dimethyl-formamide (DMF), N-methyl-2-pyrrolidone(NMP), Methyl acetone(MEK) or/and their mixture.
a2. Add the polyrotaxane to a suitable dispersion solvent at a suitable temperature and atmosphere to form a polyrotaxane mixed solution, and add a certain amount of halogen-free flame-retardant polymer materials in batches while the slurry is in flowing state, and by uniform stirring to form a flame retardant modified polyrotaxane fluid; the polyrotaxanes include compounds of the linear polymers and the cyclic molecules; the linear polymers serve as the axis molecules in the compounds and have a molecular weight of more than 10,000 and can be chemically modified by stopper molecule; the cyclic molecules allow the linear chain molecules to pass through, and having at least one reactive functional group capable of producing a reaction with the cyclic molecules of the halogen-free flame-retardant polymer materials; Halogen-free flame-retardant polymer materials are low molecular weight polymer materials containing phosphorus chemical groups, and the phosphorus content must exceed 10%; The ratio of starting material of polyrotaxane/ halogen-free polymer = 1/9.
b. Apply high-concentration graphene dispersion slurry to high-speed grinding and shear dispersion to make the slurry concentration distribution difference less than 5%, and then add a certain amount of flame-retardant modified polyrotaxane fluid in batches while the slurry is in flowing state, and uniformly mixed by shear mixing to form a graphene polyurethane composite fluid with viscosity range of 1000~1500cps, and the slurry agglomeration particle size distribution D90 is less than 15um;
c. Using the multi-layered graphene composite fluid as the base raw material, the polyurethane resin is added in batches under the fluid flow state, and is uniformly mixed by shear mixing to form a graphene polyurethane composite fluid with viscosity range of 1000~1500cps, and the slurry agglomeration particle size distribution D90 is less than 10um;
d. Continuously coat the graphene polyurethane composite fluid on the base substrate **10** with the intermediate release layer **11** by knife coating, comma coating, transfer coating or slot die coating, etc., forming a conductive flame retardant and breathable membrane layer **20** with molding width of at least 1540cm, a length of at least 1000m and a molding and drying temperature between 90 and 180°C; and
e. The conductive flame retardant and breathable membrane layer **20** is independently formed into a conductive flame retardant and breathable membrane layer after release winding; wherein, the release winding refers to reversely winding the conductive flame retardant and breathable membrane layer **20** under a certain tension on a certain size the paper roll, the tension is less than 3kg and the paper roll size is less than 6 inches, the conductive flame retardant and breathable membrane after release winding needs to be stored for ripening at room temperature for 24 hours; the thickness range of the conductive flame retardant and breathable membrane after ripening is within 25~45um, basis weight range is 30~50gsm; The substrate 10 with intermediate released layer11 is called released paper, which is a paper coated/bonded with a released layer, such as PE, PP, silicon, etc. in this case it should be the PE.

The solid weight ratio shown in the following tables illustrate the preparation processes of embodiments 1 to 7.

| Example | Graphene (wt%) | Modified polyrotaxane(wt%) | PU(wt%) |
|---|---|---|---|
| 1 | 30 | 35 (polyrotaxane/ halogen-free polymer=3.5/31.5) | 35 |
| 2 | 40 | 30 (polyrotaxane/ halogen-free polymer=3/27) | 30 |
| 3 | 45 | 27.5 (polyrotaxane/ halogen-free polymer=2.75/24.75) | 27.5 |
| 4 | 50 | 25 (polyrotaxane/ halogen-free polymer=2.5/22.5) | 25 |
| 5 | 55 | 22.5 (polyrotaxane/ halogen-free polymer=2.25/20.25) | 22.5 |
| 6 | 60 | 20 (polyrotaxane/ halogen-free polymer=2/18) | 20 |
| 7 | 70 | 15 (polyrotaxane/ halogen-free polymer=1.5/13.5) | 15 |

Embodiment 1
   a1. The active agent, a solvent and an multi-layered graphene are formed into a the slurry of high-concentration multi-layered graphene after applying high-speed grinding and shear dispersion; wherein: the carbon content of graphene is ≥98%, the graphene thickness is ≦2.5nm, the average distribution range of graphene membrane diameter is between 0.1µm~1.5µm, the optimal distribution range is between 0.3µm~0.8µm, the surface oxygen content is <0.1%, and a high-concentration multi-layered graphene dispersion slurry with the concentration difference between the upper and lower parts of the tank for 5% will be generated after 20 minutes of pre-dispersion process;
   a2. Add the polyrotaxane to a suitable dispersion solvent at a suitable temperature and atmosphere to form a polyrotaxane mixed solution, and add a certain amount of halogen-free flame-retardant polymer materials in batches while the slurry is in flowing state, and by uniform stirring to form a flame retardant modified polyrotaxane fluid; the polyrotaxane can be the SeRM Super Polymer which is the products SA2405P-20 of the ADVANCED SOFTMATERIALS, and the halogen-free flame-retardant polymer materials can be the poroduct TFT-210 which is a small molecular weight phosphorus-containing flame-retardant polymer material, the mixing conditions include the mixing ratio of SA2405P-20/TFT210 is 1/9, the fluid temperature is 25~80°C, the atmosphere is a nitrogen-oxygen mixed atmosphere, and the oxygen content is less than 20%;
   b. Add flame-retardant modified polyrotaxane fluid to the high-concentration graphene dispersion slurry under the flowing state and continue high-speed stirring, the high-concentration graphene dispersion slurry/flame-retardant modified polyrotaxane fluid is mixed at a ratio of 10/2.5, then continue high-speed stirring to form a uniformly flowing multi-layered graphene composite fluid; the effective addition amount of graphene is 16%, the viscosity range is between 5000-10000cps, and the slurry particle size distribution D90 is less than 15um;
   c. Making a graphene-polyurethane composite fluid by mixing raw materials of multi-layered graphene composite fluid and polyurethane resin; wherein the solid weight content of the polyurethane resin is between 30~35%, the viscosity range is between 800cps~1500cps, and the multi-layered graphene composite fluid and polyurethane resin are processed in a high-speed homogenization process at a weight ratio of 1.85/1, with a stirring speed of 2500 rpm, a die diameter of 6 cm, a die spacing of 1 mm, and a processing time of 1 hour, the effective solid content of the graphene-polyurethane composite fluid is between 53~55%, the flow viscosity is between 1000-3000cps;
   d. The graphene-polyurethane composite fluid is continuously coated and molding on a base substrate material with the release force to form a conductive flame retardant and breathable membrane layer; wherein the base substrate material is a release paper with a release layer on the surface, the basis weight is 190~200gsm, and the surface of the release layer of the release paper is continuously coated with the knife coating method, then after high temperature drying, a conductive flame retardant and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C; The basis weight range of the conductive flame retardant and breathable membrane layer ranges from 227gsm to 239gsm, the effective addition amount of graphene is 30%, and the surface resistance 500~600Ω/sq; and
   e. By the release winding process, the conductive flame retardant and breathable membrane layer is enable to form an independently moldable conductive flame retardant and breathable membrane; wherein, the process conditions in the release winding process are: the winding speed is 15-20m/min, the tension is less than 3kg, the paper roll size is less than 6 inches, the thickness of the conductive flame retardant and breathable membrane is 27um, the basis weight is 38±1gsm, the moisture permeability is 50000g/m²/24h, the water pressure resistance value is 10000mmH₂O; Electromagnetic properties of the conductive flame retardant and breathable membrane is: In the test range of electromagnetic wave frequency 0.5GHz~12GHz, the electromagnetic wave power loss percentage is at least greater than 4%, the conductive flame retardant and breathable membrane can pass the resistance test of FAR 25.853 fire test standard.
Embodiment 2
   a1. The active agent, a solvent and an multi-layered graphene are formed into a the slurry of high-concentration multi-layered graphene after applying high-speed grinding and shear dispersion; wherein: the carbon content of graphene is >98%, the graphene thickness is ≦ 2.5nm, the average distribution range of graphene membrane diameter is between 0.1µm~1.5µm, the optimal distribution range is between 0.3µm~0.8µm, the surface oxygen content is <0.1%, and a high-concentration multi-layered graphene dispersion slurry with the concentration difference between the upper and lower parts of the tank for 5% will be generated after 20 minutes of pre-dispersion process;
   a2. Add the polyrotaxane to a suitable dispersion solvent at a suitable temperature and atmosphere to form a polyrotaxane mixed solution, and add a certain amount of halogen-free flame-retardant polymer materials in batches while the slurry is in flowing state, and by uniform stirring to form a flame retardant modified polyrotaxane fluid; the polyrotaxane can be the SeRM Super Polymer which is the products SA2405P-20 of the ADVANCED SOFTMATERIALS, and the halogen-free flame-retardant polymer materials can be the poroduct TFT-210 which is a small molecular weight phosphorus-containing flame-retardant polymer material, the mixing conditions include the mixing ratio of SA2405P-20/TFT210 is 1/9, the fluid temperature is 25~80°C, the atmosphere is a nitrogen-oxygen mixed atmosphere, and the oxygen content is less than 20%;
   b. Add flame-retardant modified polyrotaxane fluid to the high-concentration graphene dispersion slurry under the flowing state and continue high-speed stirring, the high-concentration graphene dispersion slurry/flame-retardant modified polyrotaxane fluid is mixed at a ratio of 10/1.5, then continue high-speed stirring to form a uniformly flowing multi-layered graphene composite fluid; the effective addition amount of graphene is 17.3%, the viscosity range is between 5000-10000cps, and the slurry particle size distribution D90 is less than 15um;
   c. Making a graphene-polyurethane composite fluid by mixing raw materials of multi-layered graphene composite fluid and polyurethane resin; wherein the solid weight content of the polyurethane resin is between 30~35%, the viscosity range is between 800cps~1500cps, and the multi-layered graphene composite fluid and polyurethane resin are processed in a high-speed homogenization process at a weight ratio of 2.67/1, with a stirring speed of 2500 rpm, a die diameter of 6 cm, a die spacing of 1 mm, and a processing time of 1 hour, the effective solid content of the graphene-polyurethane composite fluid is between 31~32%, the flow viscosity is between 1000-3000cps;
   d. The graphene-polyurethane composite fluid is continuously coated and molding on a base substrate material with the release force to form a conductive flame retardant and breathable membrane layer; wherein the base substrate material is a release paper with a release layer on the surface, the basis weight is 190~200gsm, and the surface of the release layer of the release paper is continuously coated with the knife coating method, then after high temperature drying, a conductive flame retardant and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C; The basis weight range of the conductive flame retardant and breathable membrane layer ranges from 229gsm to 241gsm, the effective addition amount of graphene is 40%, and the surface resistance 200~350Ω/sq; and
   e. By the release winding process, the conductive flame retardant and breathable membrane layer is enable to form an independently moldable conductive flame retardant and breathable membrane; wherein, the process conditions in the release winding process are: the winding speed is 15-20m/min, the tension is less than 3kg, the paper roll size is less than 6 inches, the thickness of the conductive flame retardant and breathable membrane is 27um, the basis weight is 39±2gsm, the moisture permeability is 40000g/m²/24h, the water pressure resistance value is 10000mmH₂O; Electromagnetic properties of the conductive flame retardant and breathable membrane is: In the test range of electromagnetic wave frequency 0.5GHz~12GHz, the electromagnetic wave power loss percentage is at least greater than 15%, the conductive flame retardant and breathable membrane can pass the resistance test of FAR 25.853 fire test standard.
Embodiment 3
   a1. The active agent, a solvent and an multi-layered graphene are formed into a the slurry of high-concentration multi-layered graphene after applying high-speed grinding and shear dispersion; wherein: the carbon content of graphene is >98%, the graphene thickness is ≦ 2.5nm, the average distribution range of graphene membrane diameter is between 0.1µm~1.5µm, the optimal distribution range is between 0.3µm~0.8µm, the surface oxygen content is <0.1%, and a high-concentration multi-layered graphene dispersion slurry with the concentration difference between the upper and lower parts of the tank for 5% will be generated after 20 minutes of pre-dispersion process;
   a2. Add the polyrotaxane to a suitable dispersion solvent at a suitable temperature and atmosphere to form a polyrotaxane mixed solution, and add a certain amount of halogen-free flame-retardant polymer materials in batches while the slurry is in flowing state, and by uniform stirring to form a flame retardant modified polyrotaxane fluid; the polyrotaxane can be the SeRM Super Polymer which is the products SA2405P-20 of the ADVANCED SOFTMATERIALS, and the halogen-free flame-retardant polymer materials can be the poroduct TFT-210 which is a small molecular weight phosphorus-containing flame-retardant polymer material, the mixing conditions include the mixing ratio of SA2405P-20/TFT210 is 1/9, the fluid temperature is 25~80°C, the atmosphere is a nitrogen-oxygen mixed atmosphere, and the oxygen content is less than 20%;
   b. Add flame-retardant modified polyrotaxane fluid to the high-concentration graphene dispersion slurry under the flowing state and continue high-speed stirring, the high-concentration graphene dispersion slurry/flame-retardant modified polyrotaxane fluid is mixed at a ratio of 10/1.2, then continue high-speed stirring to form a uniformly flowing multi-layered graphene composite fluid; the effective addition amount of graphene is 18%, the viscosity range is between 5000-10000cps, and the slurry particle size distribution D90 is less than 15um;
   c. Making a graphene-polyurethane composite fluid by mixing raw materials of multi-layered graphene composite fluid and polyurethane resin; wherein the solid weight content of the polyurethane resin is between 30~35%, the viscosity range is between 800cps~1500cps, and the multi-layered graphene composite fluid and polyurethane resin are processed in a high-speed homogenization process at a weight ratio of 3.2/1, with a stirring speed of 2500 rpm, a die diameter of 6 cm, a die spacing of 1 mm, and a processing time of 1 hour, the effective solid content of the graphene-polyurethane composite fluid is between 30~31%, the flow viscosity is between 1000-3000cps;
   d. The graphene-polyurethane composite fluid is continuously coated and molding on a base substrate material with the release force to form a conductive flame retardant and breathable membrane layer; wherein the base substrate material is a release paper with a release layer on the surface, the basis weight is 190~200gsm, and the surface of the release layer of the release paper is continuously coated with the knife coating method, then after high temperature drying, a conductive flame retardant and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C; The basis weight range of the conductive flame retardant and breathable membrane layer ranges from 232gsm to 246gsm, the effective addition amount of graphene is 45%, and the surface resistance 100~200Ω/sq; and
   e. By the release winding process, the conductive flame retardant and breathable membrane layer is enable to form an independently moldable conductive flame retardant and breathable membrane; wherein, the process conditions in the release winding process are: the winding speed is 15-20m/min, the tension is less than 3kg, the paper roll size is less than 6 inches, the thickness of the conductive flame retardant and breathable membrane is 27um, the basis weight is 44±2gsm, the moisture permeability is 40000g/m²/24h, the water pressure resistance value is 10000mmH₂O; Electromagnetic properties of the conductive flame retardant and breathable membrane is: In the test range of electromagnetic wave frequency 0.5GHz~12GHz, the electromagnetic wave power loss percentage is at least greater than 24%, the conductive flame retardant and breathable membrane can pass the resistance test of FAR 25.853 fire test standard.
Embodiment 4
   a1. The active agent, a solvent and an multi-layered graphene are formed into a the slurry of high-concentration multi-layered graphene after applying high-speed grinding and shear dispersion; wherein: the carbon content of graphene is >98%, the graphene thickness is ≦ 2.5nm, the average distribution range of graphene membrane diameter is between 0.1µm~1.5µm, the optimal distribution range is between 0.3µm~0.8µm, the surface oxygen content is <0.1%, and a high-concentration multi-layered graphene dispersion slurry with the concentration difference between the upper and lower parts of the tank for 5% will be generated after 20 minutes of pre-dispersion process;
   a2. Add the polyrotaxane to a suitable dispersion solvent at a suitable temperature and atmosphere to form a polyrotaxane mixed solution, and add a certain amount of halogen-free flame-retardant polymer materials in batches while the slurry is in flowing state, and by uniform stirring to form a flame retardant modified polyrotaxane fluid; the polyrotaxane can be the SeRM Super Polymer which is the products SA2405P-20 of the ADVANCED SOFTMATERIALS, and the halogen-free flame-retardant polymer materials can be the poroduct TFT-210 which is a small molecular weight phosphorus-containing flame-retardant polymer material, the mixing conditions include the mixing ratio of SA2405P-20/TFT210 is 1/9, the fluid temperature is 25~80°C, the atmosphere is a nitrogen-oxygen mixed atmosphere, and the oxygen content is less than 20%;
   b. Add flame-retardant modified polyrotaxane fluid to the high-concentration graphene dispersion slurry under the flowing state and continue high-speed stirring, the high-concentration graphene dispersion slurry/flame-retardant modified polyrotaxane fluid is mixed at a ratio of 10/1, then continue high-speed stirring to form a uniformly flowing multi-layered graphene composite fluid; the effective addition amount of graphene is 18.3%, the viscosity range is between 5000-10000cps, and the slurry particle size distribution D90 is less than 15um;
   c. Making a graphene-polyurethane composite fluid by mixing raw materials of multi-layered graphene composite fluid and polyurethane resin; wherein the solid weight content of the polyurethane resin is between 30~35%, the viscosity range is between 800cps~1500cps, and the multi-layered graphene composite fluid and polyurethane resin are processed in a high-speed homogenization process at a weight ratio of 3.85/1, with a stirring speed of 2500 rpm, a die diameter of 6 cm, a die spacing of 1 mm, and a processing time of 1 hour, the effective solid content of the graphene-polyurethane composite fluid is between 28~29%, the flow viscosity is between 1000-3000cps;
   d. The graphene-polyurethane composite fluid is continuously coated and molding on a base substrate material with the release force to form a conductive flame retardant and breathable membrane layer; wherein the base substrate material is a release paper with a release layer on the surface, the basis weight is 190~200gsm, and the surface of the release layer of the release paper is continuously coated with the knife coating method, then after high temperature drying, a conductive flame retardant and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C; The basis weight range of the conductive flame retardant and breathable membrane layer ranges from 233gsm to 247gsm, the effective addition amount of graphene is 50%, and the surface resistance 100~200Ω/sq; and
   e. By the release winding process, the conductive flame retardant and breathable membrane layer is enable to form an independently moldable conductive flame retardant and breathable membrane; wherein, the process conditions in the release winding process are: the winding speed is 15-20m/min, the tension is less than 3kg, the paper roll size is less than 6 inches, the thickness of the conductive flame retardant and breathable membrane is 27um, the basis weight is 45±2gsm, the moisture permeability is 35000g/m²/24h, the water pressure resistance value is 10000mmH₂O; Electromagnetic properties of the conductive flame retardant and breathable membrane is: In the test range of electromagnetic wave frequency 0.5GHz~12GHz, the electromagnetic wave power loss percentage is at least greater than 34%, the conductive flame retardant and breathable membrane can pass the resistance test of FAR 25.853 fire test standard.
Embodiment 5
   a1. The active agent, a solvent and an multi-layered graphene are formed into a the slurry of high-concentration multi-layered graphene after applying high-speed grinding and shear dispersion; wherein: the carbon content of graphene is >98%, the graphene thickness is ≦ 2.5nm, the average distribution range of graphene membrane diameter is between 0.1µm~1.5µm, the optimal distribution range is between 0.3µm~0.8µm, the surface oxygen content is <0.1%, and a high-concentration multi-layered graphene dispersion slurry with the concentration difference between the upper and lower parts of the tank for 5% will be generated after 20 minutes of pre-dispersion process;
   a2. Add the polyrotaxane to a suitable dispersion solvent at a suitable temperature and atmosphere to form a polyrotaxane mixed solution, and add a certain amount of halogen-free flame-retardant polymer materials in batches while the slurry is in flowing state, and by uniform stirring to form a flame retardant modified polyrotaxane fluid; the polyrotaxane can be the SeRM Super Polymer which is the products SA2405P-20 of the ADVANCED SOFTMATERIALS, and the halogen-free flame-retardant polymer materials can be the poroduct TFT-210 which is a small molecular weight phosphorus-containing flame-retardant polymer material, the mixing conditions include the mixing ratio of SA2405P-20/TFT210 is 1/9, the fluid temperature is 25~80°C, the atmosphere is a nitrogen-oxygen mixed atmosphere, and the oxygen content is less than 20%;
   b. Add flame-retardant modified polyrotaxane fluid to the high-concentration graphene dispersion slurry under the flowing state and continue high-speed stirring, the high-concentration graphene dispersion slurry/flame-retardant modified polyrotaxane fluid is mixed at a ratio of 10/0.8, then continue high-speed stirring to form a uniformly flowing multi-layered graphene composite fluid; the effective addition amount of graphene is 18.3%, the viscosity range is between 5000-10000cps, and the slurry particle size distribution D90 is less than 15um;
   c. Making a graphene-polyurethane composite fluid by mixing raw materials of multi-layered graphene composite fluid and polyurethane resin; wherein the solid weight content of the polyurethane resin is between 15~20%, the viscosity range is between 800cps~1500cps, and the multi-layered graphene composite fluid and polyurethane resin are processed in a high-speed homogenization process at a weight ratio of 4.62/1, with a stirring speed of 2500 rpm, a die diameter of 6 cm, a die spacing of 1 mm, and a processing time of 1 hour, the effective solid content of the graphene-polyurethane composite fluid is between 27~28%, the flow viscosity is between 1000-3000cps;
   d. The graphene-polyurethane composite fluid is continuously coated and molding on a base substrate material with the release force to form a conductive flame retardant and breathable membrane layer; wherein the base substrate material is a release paper with a release layer on the surface, the basis weight is 190~200gsm, and the surface of the release layer of the release paper is continuously coated with the knife coating method, then after high temperature drying, a conductive flame retardant and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C; The basis weight range of the conductive flame retardant and breathable membrane layer ranges from 210gsm to 250gsm, the effective addition amount of graphene is 55%, and the surface resistance 75~90Ω/sq; and
   e. By the release winding process, the conductive flame retardant and breathable membrane layer is enable to form an independently moldable conductive flame retardant and breathable membrane; wherein, the process conditions in the release winding process are: the winding speed is 15-20m/min, the tension is less than 3kg, the paper roll size is less than 6 inches, the thickness of the conductive flame retardant and breathable membrane is 27um, the basis weight is 47±2gsm, the moisture permeability is 25000g/m²/24h, the water pressure resistance value is 10000mmH₂O; Electromagnetic properties of the conductive flame retardant and breathable membrane is: In the test range of electromagnetic wave frequency 0.5GHz~12GHz, the electromagnetic wave power loss percentage is at least greater than 45%, the conductive flame retardant and breathable membrane can pass the resistance test of FAR 25.853 fire test standard.
Embodiment 6
   a1. The active agent, a solvent and an multi-layered graphene are formed into a the slurry of high-concentration multi-layered graphene after applying high-speed grinding and shear dispersion; wherein: the carbon content of graphene is >98%, the graphene thickness is ≦ 2.5nm, the average distribution range of graphene membrane diameter is between 0.1µm~1.5µm, the optimal distribution range is between 0.3µm~0.8µm, the surface oxygen content is <0.1%, and a high-concentration multi-layered graphene dispersion slurry with the concentration difference between the upper and lower parts of the tank for 5% will be generated after 20 minutes of pre-dispersion process;
   a2. Add the polyrotaxane to a suitable dispersion solvent at a suitable temperature and atmosphere to form a polyrotaxane mixed solution, and add a certain amount of halogen-free flame-retardant polymer materials in batches while the slurry is in flowing state, and by uniform stirring to form a flame retardant modified polyrotaxane fluid; the polyrotaxane can be the SeRM Super Polymer which is the products SA2405P-20 of the ADVANCED SOFTMATERIALS, and the halogen-free flame-retardant polymer materials can be the poroduct TFT-210 which is a small molecular weight phosphorus-containing flame-retardant polymer material, the mixing conditions include the mixing ratio of SA2405P-20/TFT210 is 1/9, the fluid temperature is 25~80°C, the atmosphere is a nitrogen-oxygen mixed atmosphere, and the oxygen content is less than 20%;
   b. Add flame-retardant modified polyrotaxane fluid to the high-concentration graphene dispersion slurry under the flowing state and continue high-speed stirring, the high-concentration graphene dispersion slurry/flame-retardant modified polyrotaxane fluid is mixed at a ratio of 10/0.6, then continue high-speed stirring to form a uniformly flowing multi-layered graphene composite fluid; the effective addition amount of graphene is 19%, the viscosity range is between 5000-10000cps, and the slurry particle size distribution D90 is less than 15um;
   c. Making a graphene-polyurethane composite fluid by mixing raw materials of multi-layered graphene composite fluid and polyurethane resin; wherein the solid weight content of the polyurethane resin is between 15~20%, the viscosity range is between 800cps~1500cps, and the multi-layered graphene composite fluid and polyurethane resin are processed in a high-speed homogenization process at a weight ratio of 5.6/1, with a stirring speed of 2500 rpm, a die diameter of 6 cm, a die spacing of 1 mm, and a processing time of 1 hour, the effective solid content of the graphene-polyurethane composite fluid is between 26~27%, the flow viscosity is between 1000-3000cps;
   d. The graphene-polyurethane composite fluid is continuously coated and molding on a base substrate material with the release force to form a conductive flame retardant and breathable membrane layer; wherein the base substrate material is a release paper with a release layer on the surface, the basis weight is 190~200gsm, and the surface of the release layer of the release paper is continuously coated with the knife coating method, then after high temperature drying, a conductive flame retardant and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C; The basis weight range of the conductive flame retardant and breathable membrane layer ranges from 237gsm to 251gsm, the effective addition amount of graphene is 60%, and the surface resistance 65~80Ω/sq; and
   e. By the release winding process, the conductive flame retardant and breathable membrane layer is enable to form an independently moldable conductive flame retardant and breathable membrane; wherein, the process conditions in the release winding process are: the winding speed is 15-20m/min, the tension is less than 3kg, the paper roll size is less than 6 inches, the thickness of the conductive flame retardant and breathable membrane is 27um, the basis weight is 49±2gsm, the moisture permeability is 20000g/m²/24h, the water pressure resistance value is 10000mmH₂O; Electromagnetic properties of the conductive flame retardant and breathable membrane is: In the test range of electromagnetic wave frequency 0.5GHz~12GHz, the electromagnetic wave power loss percentage is at least greater than 31%, the conductive flame retardant and breathable membrane can pass the resistance test of FAR 25.853 fire test standard.
Embodiment 7
   a1. The active agent, a solvent and an multi-layered graphene are formed into a the slurry of high-concentration multi-layered graphene after applying high-speed grinding and shear dispersion; wherein: the carbon content of graphene is >98%, the graphene thickness is ≦ 2.5nm, the average distribution range of graphene membrane diameter is between 0.1µm~1.5µm, the optimal distribution range is between 0.3µm~0.8µm, the surface oxygen content is <0.1%, and a high-concentration multi-layered graphene dispersion slurry with the concentration difference between the upper and lower parts of the tank for 5% will be generated after 20 minutes of pre-dispersion process;
   a2. Add the polyrotaxane to a suitable dispersion solvent at a suitable temperature and atmosphere to form a polyrotaxane mixed solution, and add a certain amount of halogen-free flame-retardant polymer materials in batches while the slurry is in flowing state, and by uniform stirring to form a flame retardant modified polyrotaxane fluid; the polyrotaxane can be the SeRM Super Polymer which is the products SA2405P-20 of the ADVANCED SOFTMATERIALS, and the halogen-free flame-retardant polymer materials can be the poroduct TFT-210 which is a small molecular weight phosphorus-containing flame-retardant polymer material, the mixing conditions include the mixing ratio of SA2405P-20/TFT210 is 1/9, the fluid temperature is 25~80°C, the atmosphere is a nitrogen-oxygen mixed atmosphere, and the oxygen content is less than 20%;
   b. Add flame-retardant modified polyrotaxane fluid to the high-concentration graphene dispersion slurry under the flowing state and continue high-speed stirring, the high-concentration graphene dispersion slurry/flame-retardant modified polyrotaxane fluid is mixed at a ratio of 10/0.43, then continue high-speed stirring to form a uniformly flowing multi-layered graphene composite fluid; the effective addition amount of graphene is 19.2%, the viscosity range is between 5000-10000cps, and the slurry particle size distribution D90 is less than 15um;
   c. Making a graphene-polyurethane composite fluid by mixing raw materials of multi-layered graphene composite fluid and polyurethane resin; wherein the solid weight content of the polyurethane resin is between 15~20%, the viscosity range is between 800cps~1500cps, and the multi-layered graphene composite fluid and polyurethane resin are processed in a high-speed homogenization process at a weight ratio of 8.2/1, with a stirring speed of 2500 rpm, a die diameter of 6 cm, a die spacing of 1 mm, and a processing time of 1 hour, the effective solid content of the graphene-polyurethane composite fluid is between 24~25%, the flow viscosity is between 1000-3000cps;
   d. The graphene-polyurethane composite fluid is continuously coated and molding on a base substrate material with the release force to form a conductive flame retardant and breathable membrane layer; wherein the base substrate material is a release paper with a release layer on the surface, the basis weight is 190~200gsm, and the surface of the release layer of the release paper is continuously coated with the knife coating method, then after high temperature drying, a conductive flame retardant and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C; The basis weight range of the conductive flame retardant and breathable membrane layer ranges from 239gsm to 253gsm, the effective addition amount of graphene is 70%, and the surface resistance 50~75Ω/sq; and
   e. By the release winding process, the conductive flame retardant and breathable membrane layer is enable to form an independently moldable conductive flame retardant and breathable membrane; wherein, the process conditions in the release winding process are: the winding speed is 15-20m/min, the tension is less than 3kg, the paper roll size is less than 6 inches, the thickness of the conductive flame retardant and breathable membrane is 27um, the basis weight is 51±2gsm, the moisture permeability is 20000g/m²/24h, the water pressure resistance value is 10000mmH₂O; Electromagnetic properties of the conductive flame retardant and breathable membrane is: In the test range of electromagnetic wave frequency 0.5GHz~12GHz, the electromagnetic wave power loss percentage is at least greater than 12%, the conductive flame retardant and breathable membrane can pass the resistance test of FAR 25.853 fire test standard.

Therefore, the conductive flame retardant and breathable membrane prepared by the present invention uses multi-layered graphene powder as raw material to directly configure a high-concentration graphene dispersion slurry, without the requirement for additional concentration processes; Furthermore, using modified polyrotaxane with a special chemical structure as a fluidity adjuster for high-concentration graphene dispersion slurry can effectively adjust the fluidity of high-concentration graphene dispersion slurry and improve the anti-settling properties of graphene, and provides flame retardancy to the Polyurethane and improves flexibility, so a thinner graphene polyurethane membrane can be achieved in one coating process; Therefore, in addition to being able to smoothly release membrane from the release paper, the present invention also has good moisture permeability ≧ 30000g/m²/24h and the water pressure resistance ≧ 10000mmH₂O, and having the surface resistance below 10²Ω/sq, the electromagnetic wave power loss percentage is at least greater than 30% inn the test range of electromagnetic wave frequency 0.5GHz~12GHz, and can pass the resistance test of FAR 25.853 fire test standard; Therefore, the present invention has the effect of using modified polyrotaxane polymers to improve the flame retardancy and flexibility of moisture-permeable polyurethane, so as to simultaneously achieve high conductivity with high graphene additions.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A conductive flame retardant and breathable membrane, which adds an multi-layered graphene with a solid weight ratio of 30~70wt% relative to the conductive flame retardant and breathable membrane and a polyrotaxane with a solid weight content of at least 15wt% relative to the conductive flame retardant and breathable membrane to a polyurethane resin, the polyrotaxane contains compounds of linear polymers and cyclic molecules, the cyclic molecules of polyrotaxane are also modified by surface modification with a halogen-free flame-retardant polymer material.

2. The conductive flame retardant and breathable membrane as claimed in claim 1, wherein the solid weight ratio of the multi-layered graphene is 30~70wt%, the solid weight ratio of the polyrotaxane is 15~35wt%, the solid weight ratio of the polyurethane resin is 15~35wt%.

3. The conductive flame retardant and breathable membrane as claimed in claim 1, wherein the formed conductive flame retardant and breathable membrane by one coating has characteristics listed below, the thickness is between 30~50um, the basis weight range is between 35gsm~60gsm, the surface resistance measured according to JIS K-7194 method is at least ≦ 10² Ω /sq, the moisture permeability measured according to JIS L1099B-1 standard is at least 3000g/m²/24h, the water pressure resistance value measured according to JIS L1092B-2009 standard is at least 10000mmH₂O, the flame retardancy can pass the flame retardant test specification of FAR 25.853, under the electromagnetic wave frequency 0.5GHz-12GHz test range, the power loss percentage is greater than 30%.

4. The conductive flame retardant and breathable membrane as claimed in claim 1, wherein the preferred solid weight ratio of the multi-layered graphene is 50~60wt%, the halogen-free flame-retardant polymer material is low molecular weight polymer materials containing phosphorus chemical groups, and the phosphorus content must exceed 10% of total weight.

5. The conductive flame retardant and breathable membrane as claimed in claim 1, wherein the ratio of starting material of polyrotaxane/halogen-free polymer = 1/9.

6. The conductive flame retardant and breathable membrane as claimed in claim 1, wherein the moisture permeability of the polyurethane resin measured according to JIS L1099 B-1 standard is at least 100000g/m²/24h, the average molecular weight of the polyrotaxane is between 100,000 and 500,000, at least 95% of the multi-layered graphene has a lateral size of 1000~30000nm and thickness of 0.34~7nm, and the oxygen content of multi-layered graphene is at least less than 0.1%, the thickness ratio of multi-layered graphene is between 200 and 400.

7. The conductive flame retardant and breathable membrane as claimed in claim 6, wherein the preferred condition is the multi-layered graphene has a lateral size of 6000~8000nm and thickness of 2~3nm.

8. The conductive flame retardant and breathable membrane as claimed in claim 1, wherein the polyurethane resin includes at least a reactive functional group, the polyrotaxanes include compounds of the linear polymers and the cyclic molecules; the linear polymers serve as the axis molecules in the compounds and have a molecular weight of more than 10,000 and can be chemically modified by stopper molecule; the cyclic molecules allow the linear chain molecules to pass through, and having at least one reactive functional group capable of producing a crosslinking reaction with the reactive functional groups in the polyurethane resin.

9. The conductive flame retardant and breathable membrane as claimed in claim 8, wherein the main chain polymer of the linear polymers includes the polymers of polyvinyl alcohol, polyvinylpyrrole, polyethylene glycol, polypropylene glycol, polyvinyl acetal resin, polydimethylsiloxane, polyamine, polyethyleneimine, polyolefin, polyester, polyvinyl chloride, polystyrene, acrylonitrile-styrene or derivatives thereof; the stopper molecule includes a dinitrophenyl group, an adamantyl group or a trityl group; the cyclic molecule includes a calixarene compound, a cryptether compound, a cyclic aromatic compound, a macrocyclic amine compound, a crown ether compound or a cyclodextrin compound.

10. The conductive flame retardant and breathable membrane as claimed in claim 9, wherein the linear polymers are the linear polymers based on polyethylene glycol; the cyclic molecules are the cyclodextrin, substituted cyclodextrin, or a reactive functional groups are further added into the substitution structure to obtain a substituted cyclodextrin compound.

11. The conductive flame retardant and breathable membrane as claimed in claim 10, wherein the reactive functional groups added into the cyclic molecules includes hydroxy, carboxyl, acrylic, methacrylic, epoxy or vinyl.

12. The conductive flame retardant and breathable membrane as claimed in claim 8, wherein the reactive functional groups in polyurethane resin include carbonyl groups, amine groups, hydroxyl groups and epoxy groups.
